(19) Europäisches Patentamt
European Patent Office
Office européen des brevets

(11) **EP 3 762 870 B1**

(12) **EUROPÄISCHE PATENTSCHRIFT**

(45) Veröffentlichungstag und Bekanntmachung des Hinweises auf die Patenterteilung:
**10.08.2022 Patentblatt 2022/32**

(21) Anmeldenummer: **19705941.3**

(22) Anmeldetag: **11.02.2019**

(51) Internationale Patentklassifikation (IPC):
*G06K 19/06* (2006.01)

(52) Gemeinsame Patentklassifikation (CPC):
**G06K 19/06037; G06K 19/06046; G06K 19/06056**

(86) Internationale Anmeldenummer:
**PCT/EP2019/053247**

(87) Internationale Veröffentlichungsnummer:
**WO 2019/170367 (12.09.2019 Gazette 2019/37)**

(54) **ENTFERNUNGSMESSELEMENT**

DISTANCE-MEASURING ELEMENT

ÉLÉMENT DE TÉLÉMÉTRIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.03.2018 DE 102018203620**

(43) Veröffentlichungstag der Anmeldung:
**13.01.2021 Patentblatt 2021/02**

(73) Patentinhaber: **Robert Bosch GmbH**
**70442 Stuttgart (DE)**

(72) Erfinder: **SCHAEFER, Frank-Rene**
**74357 Boennigheim (DE)**

(56) Entgegenhaltungen:
**EP-A1- 1 222 604          EP-A2- 0 484 132**
**DE-T5-112015 006 609**

**Beschreibung**

Die Erfindung betrifft ein Entfernungsmesselement. Die Erfindung betrifft weiterhin ein Verfahren zum Herstellen eines Entfernungsmesselements. Die Erfindung betrifft ferner eine Vorrichtung zum Herstellen eines Entfernungsmesselements. Der Erfindung betrifft ferner ein Computerprogrammprodukt.

Stand der Technik

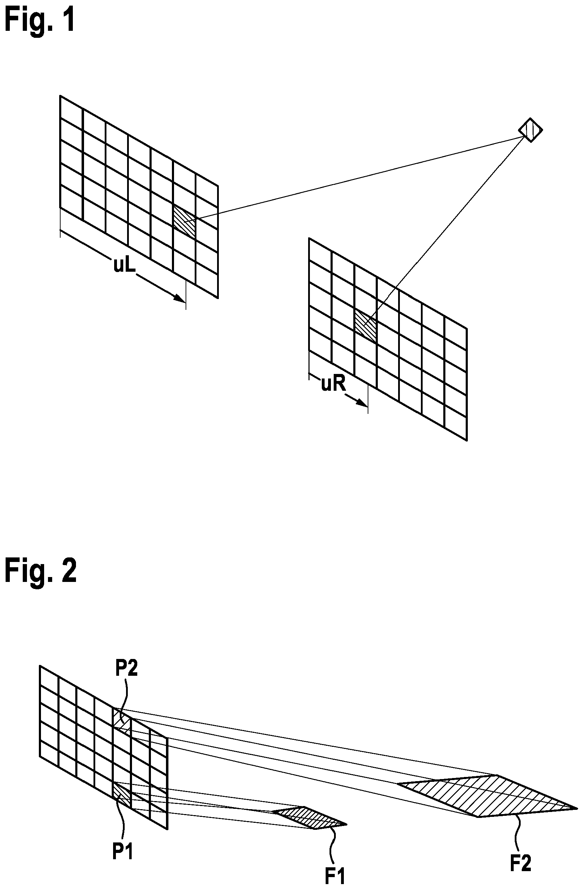

Bei der Messung von Distanzen durch Stereoskopie werden mit zwei Linsen zwei Bilder einer Szene betrachtet, die von räumlich versetzten Kameras aufgenommen wurden. Innerhalb der Bilder werden Punkte identifiziert, die zum gleichen Objekt im Raum gehören. Durch den räumlichen Versatz der Kameras wird ein Punkt im Raum auf unterschiedliche Koordinaten uL einer linken Sensorebene und uR einer rechten Sensorebene projiziert. Der horizontale Versatz der Koordinaten uL und uR eines identifizierten Punktes in beiden Bildern nennt man Disparität d = uL - uR, wobei die Disparität ein Maß für die Entfernung des Punktes zum Betrachter ist. Eine grundsätzliche Darstellung des Prinzips der stereoskopischen Aufnahme ist in Fig. 1 dargestellt.

Für das Funktionieren der automatischen Entfernungsmessung durch Stereoskopie ist es entscheidend, dass ein Punkt in beiden Bildern identifiziert werden kann. Dies kann zum einen durch den Wert selbst, aber auch durch die Werte von Pixel in der direkten Umgebung passieren. Insbesondere bei Objektoberflächen mit homogenem Farbverlauf ist eine derartige Identifikation schwer bis unmöglich.

Alle Punkte der homogenen Fläche haben den gleichen Wert. Deshalb kann ein Punkt in diesem Fall nicht durch seinen Farbwert oder den seiner Nachbarpunkte identifiziert werden.

Bei Oberflächen, die gestaltet oder beleuchtet werden können, kann ein Muster als Entfernungsmesselement aufgebracht, bzw. aufgeleuchtet werden. Dazu gibt es eine Reihe von bekannten Ansätzen. Im Folgenden kann unter dem Begriff "Wert" sowohl ein Farbwert als auch ein Intensitätswert (Helligkeitswert) verstanden werden.

Die bestehenden Verfahren benutzen Muster, die jeweils nur auf einer Entfernung optimal arbeiten. Bei steigender Entfernung erhöht sich jedoch die Fläche, die durch einen Pixel dargestellt wird, wie im Prinzip in Fig. 2 dargestellt.

Man erkennt, dass eine mittels eines Pixels P1 dargestellte nahe gelegene Fläche F1 weniger gemittelt werden muss als eine mittels eines Pixels P2 dargestellte weiter entfernte Fläche F2. Dieses ist aufgrund der Tatsache bedingt, dass die beiden Flächen F1, F2 unterschiedlich groß, die beiden Pixel P1, P2 jedoch gleich groß sind. Im Ergebnis werden dadurch für das Pixel P2 mehr Oberflächenfarbwerte gemittelt als für den Pixel P1.

Aus der DE 112015006609 T5 sind ein Bilderzeugungsgerät, ein Bilderzeugungsverfahren und ein Musterlichterzeugungsgerät bekannt. Das Bilderzeugungsgerät umfasst eine Abbildungseinheit, eine Projektionseinheit und einer Informationserzeugungseinheit. Es wird ein Projektionsmuster erzeugt, das über einen definierten Oberflächenbereich Muster aufweist, die sich in horizontaler Richtung voneinander unterscheiden, sich jedoch in vertikaler Richtung identisch wiederholen.

Offenbarung der Erfindung

Es ist eine Aufgabe der vorliegenden Erfindung, ein verbessertes Entfernungsmesselement bereitzustellen.

Gemäß einem ersten Aspekt schafft die Erfindung ein Entfernungsmesselement, aufweisend:

- wenigstens ein erstes Submuster mit einer nicht wiederholenden Struktur von Werten in einem definierten ersten Wertebereich; und
- wenigstens ein zweites Submuster, das gegenüber dem ersten Submuster eine nicht wiederholende Struktur von Werten in einem zweiten Wertebereich aufweist, wobei das zweite Submuster im definierten ersten Wertebereich keine Werte aufweist; wobei
- die wenigstens zwei Submuster über einen definierten Oberflächenbereich summarisch zu einem Oberflächenmuster überlagert sind; und
- wobei der minimale Abstand zwischen den Werten des zweiten Wertebereichs größer ist als der Maximalwert des ersten Wertebereichs.

Auf diese Weise wird für das Entfernungsmesselement eine Systematik für das Oberflächenmuster geschaffen, die eine verbesserte Entfernungsmessung aus der Nähe und aus der Ferne dadurch ermöglicht, dass Submuster auf unterschiedlichen Skalen des Oberflächenmusters nicht-wiederholend ausgebildet sind.

Gemäß einem zweiten Aspekt wird die Aufgabe gelöst mit einem Verfahren zum Herstellen eines Entfernungsmesselements, aufweisend die Schritte:

- Bereitstellen wenigstens eines ersten Submusters mit einer nicht wiederholenden Struktur von Werten in einem definierten ersten Wertebereich; und

- Bereitstellen wenigstens eines zweiten Submusters, das gegenüber dem ersten Submuster eine nicht wiederholende Struktur von Werten in einem zweiten Wertebereich aufweist, wobei das zweite Submuster im definierten ersten Wertebereich keine Werte aufweist; und
- Summarisches Überlagern der wenigstens zwei Submuster über einen definierten Oberflächenbereich, wobei der minimale Abstand zwischen den Werten des zweiten Wertebereichs größer ist als der Maximalwert des ersten Wertebereichs.

Gemäß einem dritten Aspekt wird die Aufgabe gelöst mit einer Vorrichtung zum Herstellen eines Entfernungsmesselements, aufweisend:

- eine Sequenz-Generatoreinrichtung zum Erzeugen einer Basissequenz;
- wenigstens zwei Muster-Generatoreinrichtungen, denen die Basissequenz zuführbar ist und mit denen Submuster erzeugbar sind; und
- eine Addiereinrichtung zum summarischen Überlagern der Submuster; wobei
- wenigstens ein erstes Submuster mit einer nicht wiederholenden Struktur von Werten in einem definierten ersten Wertebereich und wenigstens ein zweites Submuster, das gegenüber dem ersten Submuster eine nicht wiederholende Struktur von Werten in einem zweiten Wertebereich aufweist, erzeugbar sind, wobei das zweite Submuster im definierten ersten Wertebereich keine Werte aufweist, wobei die wenigstens zwei Submuster über einen definierten Oberflächenbereich summarisch zu einem Oberflächenmuster überlagert sind, wobei der minimale Abstand zwischen den Werten des zweiten Wertebereichs größer ist als der Maximalwert des ersten Wertebereichs.

Bevorzugte Ausführungsformen des Entfernungsmesselements sind Gegenstand von abhängigen Ansprüchen.

Eine vorteilhafte Weiterbildung des Entfernungsmesselements zeichnet sich dadurch aus, dass ein Farbwert oder ein Intensitätswert summarisch überlagerbar sind. Auf diese Weise ist eine Vielzahl von unterschiedlichen Ausgestaltungen des Oberflächenmusters des Entfernungsmesselements unterstützt.

Eine weitere vorteilhafte Weiterbildung des Entfernungsmesselements zeichnet sich dadurch aus, dass das Entfernungselement wenigstens eines aus: druckbar, malbar, klebbar, aufleuchtbar ist. Auch auf diese Weise ist vorteilhaft eine hohe technologische Diversifizierung des Entfernungsmesselements unterstützt.

Eine weitere vorteilhafte Weiterbildung der Vorrichtung zeichnet sich dadurch aus, dass das Oberflächenmuster gedithert ausgebildet ist. Auf diese Weise ist ein Herstellungsprozess für das Entfernungsmesselement vorteilhaft vereinfacht, weil ein großer Wertebereich durch wenige Werte gewissermaßen simuliert bzw. nachgebildet werden kann.

Eine weitere vorteilhafte Weiterbildung der Vorrichtung zeichnet sich dadurch aus, dass die Werte der Wertebereiche durch Zweierpotenzen repräsentiert sind. Zur Unterscheidbarkeit von Bildelementen werden mindestens zwei Werte benötigt. Die Gesamtzahl der unterscheidbaren Werte ergibt sich demnach zu $2^N$, wobei N die Anzahl der Wertebereiche (Skalen) ist. Durch die Verringerung der zu unterscheidenden Werte reduziert sich die Genauigkeitsanforderung an eine aufzubringende Farbe und deren Intensität. Durch die Festlegung auf Zweierpotenzen ist eine optimale Ausnutzung eines Wertebereichs bzw. einer Skala ermöglicht, wodurch ein maximaler Kontrast des Musters des Entfernungsmesselements erreichbar ist. Im Ergebnis ist dadurch eine gute Erkennbarkeit des Musters des Entfernungsmesselements mittels einer Stereokamera zum Zwecke der Entfernungsmessung unterstützt. Ferner können dadurch technische Anforderungen an einen Sensor der Stereokamera vorteilhaft reduziert sein.

Die Erfindung wird im Folgenden mit weiteren Merkmalen und Vorteilen anhand von mehreren Figuren im Detail beschrieben. Gleiche oder funktionsgleiche Bauelemente haben dabei gleiche Bezugszeichen. Die Figuren sind insbesondere dazu gedacht, die erfindungswesentlichen Prinzipien zu verdeutlichen und sind nicht unbedingt maßstabsgetreu ausgeführt. Der besseren Übersichtlichkeit halber kann vorgesehen sein, dass nicht in sämtlichen Figuren sämtliche Bezugszeichen eingezeichnet sind.

Offenbarte Vorrichtungsmerkmale ergeben sich analog aus entsprechenden offenbarten Verfahrensmerkmalen und umgekehrt. Dies bedeutet insbesondere, dass sich Merkmale, technische Vorteile und Ausführungen betreffend das Entfernungsmesselement in analoger Weise aus entsprechenden Ausführungen, Merkmalen und Vorteilen des Verfahrens zur Herstellung eines Entfernungsmesselements oder einer Vorrichtung zur Herstellung eines Entfernungsmesselements ergeben und umgekehrt.

In den Figuren zeigt:

Fig. 1    eine schematische Darstellung von Disparität;

Fig. 2    eine schematische Darstellung von unterschiedlichen Mittelungen bei unterschiedlich nahe angeordneten Flächen mittels Pixel;

Fig. 3 eine prinzipielle Ansicht eines ersten Submusters eines vorgeschlagenen Entfernungsmesselements;

Fig. 4 eine prinzipielle Ansicht eines zweiten Submusters eines vorgeschlagenen Entfernungsmesselements;

Fig. 5 eine prinzipielle Ansicht eines Oberflächenelements mit einer Überlagerung des ersten Submusters mit dem zweiten Submuster;

Fig. 6 ein vereinfachtes Blockschaltbild einer Vorrichtung zum Herstellen eines Entfernungsmesselements;

Fig. 7 eine erste Ausführungsform eines vorgeschlagenen Entfernungsmesselements mit einem Oberflächenmuster;

Fig. 8 eine weitere Ausführungsform eines vorgeschlagenen Entfernungsmesselements mit einem Oberflächenmuster; und

Fig .9 eine prinzipielle Darstellung eines Verfahrens zum Herstellen eines Entfernungsmesselements.

Beschreibung von Ausführungsformen

Ein Kerngedanke der vorliegenden Erfindung besteht insbesondere darin, ein Verfahren und eine Vorrichtung bereitzustellen, mit denen Oberflächenmuster entworfen werden können, die aus verschiedenen Entfernungen, demnach auf verschiedenen Skalen eindeutig identifizierbar sind. Vorteilhaft sind die vorgeschlagenen Oberflächenmuster robust gegen Kamerarauschen und Kontrastreduktion und können so vorteilhaft für ein Entfernungsmesselement verwendet werden.

Beim Betrachten einer Fläche durch eine Kamera mit diskreten Bildpunkten ("Pixel"), vergrößert sich die Fläche, welche durch einen Pixel betrachtet wird, mit steigender Entfernung, wie in Fig. 2 prinzipiell dargestellt. Ein Pixel nimmt den mittleren Farb- und Intensitätswert der Fläche an, welche er betrachtet. Durch Überlagerung von Mustern in verschiedenen Größenordnungen in geometrischer und wertemäßiger Hinsicht kann erreicht werden, dass eine Erkennbarkeit auf verschiedenen Skalen möglich wird, wie nachfolgend näher erläutert wird.

Eine Skala ist gegeben durch die Größe der geometrischen Fläche, die sie mit einem Wert füllt. Beispielsweise kann die kleinste Skala Quadrate von 4x4 Pixel füllen, die nächstgrößere Skala kann Quadrate von $18 \times 18$ Pixel füllen. Für die Werte einer Skala gilt, dass sie wertemäßig beschränkt sind. Liegen die Werte einer Skala in einem Bereich von 0...W1, so muss für alle Werte der höheren Skalen gelten, dass der minimale Abstand zwischen den Werten größer als W1 ist.

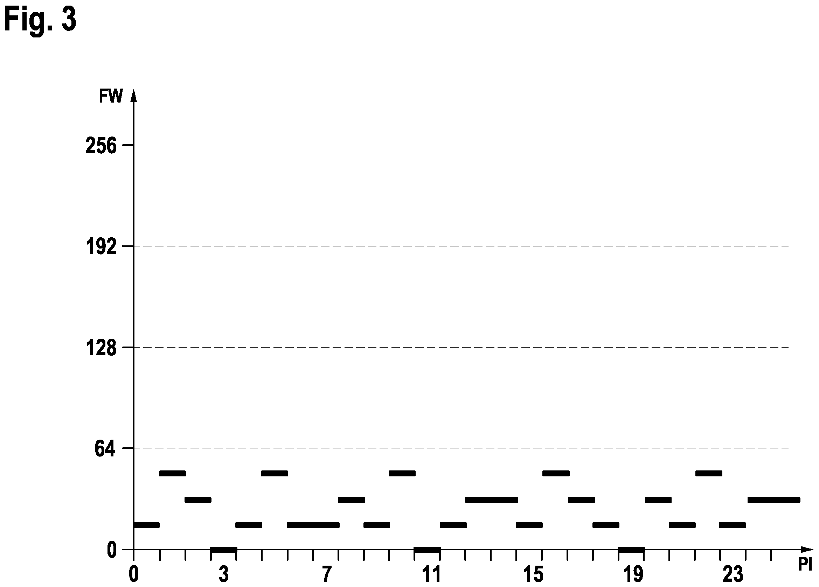

Auf diese Weise kann ein Wert einer kleinen Skala nicht durch Addition von Werten einer großen Skala erzeugt werden und umgekehrt. Der Wert jeder Skala bleibt dadurch eindeutig identifizierbar. Somit ist sichergestellt, dass die Werte der höheren Skala ein Vielfaches des oberen Wertes W1 einnehmen, wodurch eine Nichtwiederholbarkeit der Submuster bereitgestellt ist. Insbesondere ist dies dadurch ermöglicht, weil Werte der kleineren Skala nicht mit Werten der größeren Skala verwechselt werden können, da sie nicht in den Wertebereich der höheren Skala hineinfallen. Dadurch wird die Individualität der nicht-wiederholbaren Sequenzen beibehalten. Beispielsweise erreicht der Wert in Fig. 3a 64, wobei in Fig. 3b der minimale Abstand der Werte des Submusters 64 beträgt.

Jede geometrische Skala verfügt dabei über einen diskreten Wertebereich für Werte, der sich größenordnungsmäßig nicht mit dem Wertebereich einer anderen Skala überschneidet.

Beispielsweise können Flächenelemente einer Größe X > Y mit Farbwerten als Vielfache von 64 dargestellt werden, während Werte von Flächenelementen der Größe Y als Vielfache von 8 dargestellt werden, wobei der Wert 64 nicht erreicht werden darf. Auf diese Art und Weise wird erreicht, dass die Darstellung von Mustern auf größeren Skalen nicht die Unterscheidbarkeit auf kleineren Skalen beeinflusst. Der Gesamtwert der Farbwerte wird durch Addition der einzelnen Werte der verschiedenen Skalen ermittelt.

Dies ist im Prinzip in Fig. 3 dargestellt, wo eine eindimensionale Darstellung eines ersten, nicht-wiederholenden Submusters dargestellt ist. Über einen Pixelindex PI (der eine Zeile mit Pixel eines Bildes repräsentiert) in einem exemplarischen Bereich von 0...24 sind vier unterschiedliche, diskrete Farbintensitätswerte FW in einem Wertebereich von 0...64 aufgetragen. Man erkennt, dass über den gesamten Pixelindex PI der Farbintensitätswert FW vier diskrete, gleichmäßig voneinander beabstandete bzw. linear verteilte Werte 0, 16, 32, 48 (Stufenhöhe = 16) des Wertebereichs 0...64 einnimmt, wobei der Farbintensitätswert FW 64 nicht erreicht wird ("kleine Skala"). Der Wert 0 repräsentiert dabei beim jeweiligen Pixel den physikalischen Zustand "schwarz", der Wert 48 repräsentiert dabei beim jeweiligen Pixel den physikalischen Zustand "hell", die Werte 16 und 32 repräsentieren Farbintensitätswerte, die zwischen den genannten Werten liegen.

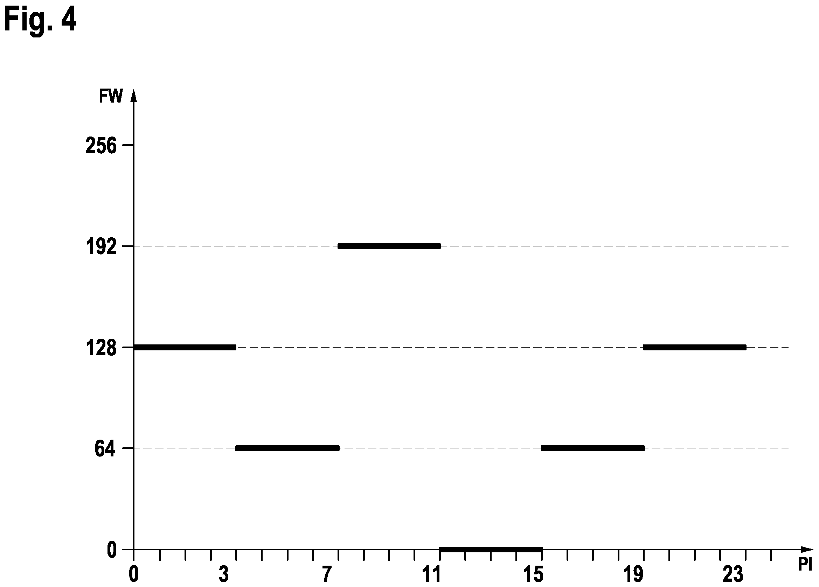

Demgegenüber ist in Fig. 4 zweites eindimensionales nicht-wiederholendes Submuster auf einer "großen Skala" dargestellt, welches über denselben Pixelindex PI von 0...24 vier diskrete, gleichmäßig voneinander beabstandete bzw.

linear verteilte Farbintensitätswerte FW (Stufenhöhe = 64) in einem Wertebereich von 0...192 aufweist. Dabei ist erkennbar, dass alle Farbintensitätswerte FW des zweiten Submusters größer als 64 sind und keine Farbintensitätswerte FW im Bereich zwischen 0...63 aufweist.

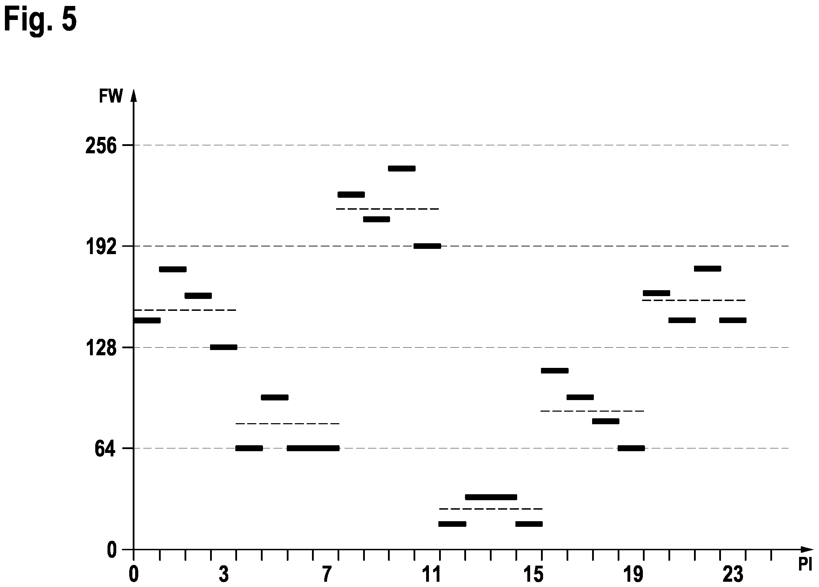

Fig. 5 repräsentiert eine summarische Überlagerung der beiden nicht-wiederholenden Submuster von Fig. 3 und 4. Man erkennt, dass dadurch eine Unverwechselbarkeit bzw. Nicht-Wiederholbarkeit des Gesamtmusters über den gesamten Pixelindex PI 0...24 erreicht ist, weil 4×4 Werte, d.h. 16 Werte unterschieden werden können. Ein Sensor einer das Gesamtmuster detektierenden Kamera muss also in der Lage sein, sechzehn unterschiedliche Messwerte sicher zu detektieren.

Dies hat im Ergebnis zur Folge, dass das Oberflächenmuster sowohl aus großer und aus kleiner Distanz eindeutig und unverwechselbar identifizierbar ist. Dies wird dadurch erreicht, dass die nicht-wiederholenden Submuster des Oberflächenmusters auf unterschiedlichen Skalen bzw. Wertebereichen ausgebildet sind. In dem erläuterten Beispiel wird für jede der beiden Skalen eine Anzahl von vier diskreten Werten angesetzt.

In Fig. 5 ist die Summation aller Werte der Submuster der der beiden Skalen von Figuren 3 und 4 über den gesamten Bereich dargestellt. Die jeweils im Bereich der vier diskreten Werte erkennbaren, kurzen gestrichelten Linien repräsentieren jeweils den Mittelwert der Werte eines Flächenelements der genannten großen Skala. Wie vorgehend erwähnt, ergibt sich der Pixelwert einer Kamera durch Mittelung über die Farb- und Intensitätswerte einer Fläche. Je weiter das betrachtete Objekt entfernt ist, desto größer ist die Fläche, über die gemittelt wird.

Bei Betrachtung aus der Nähe sind für die Kamera die Werte der kleinen Skala erkennbar bzw. unterscheidbar. Die gestrichelten Linien entsprechen somit dem Muster, das von der Kamera aus einer größeren Entfernung auf dem Entfernungsmesselement gesehen wird, wobei in Fig. 5 insgesamt sechs unterschiedliche Mittelwerte erkannt werden. Durch die große Stufenhöhe der Werte des Gesamtmusters wird auf einem Sensor der Kamera ein Muster abgebildet, das dem der ursprünglichen großen Skala von Fig. 4 entspricht. Im Ergebnis sind für die Kamera für nahe und ferne Betrachtungen auf dem Gesamtmuster von Fig. 5 die Submuster von Fig. 3 und 4 unterscheidbar.

In einer vorteilhaften nicht in Figuren dargestellten Variante ist vorgesehen, dass die Werte der Skalen der beiden Submuster Zweierpotenzen sind, wodurch Anforderungen an den Sensor der Kamera vorteilhaft reduziert sind, was im Ergebnis eine höhere Robustheit des Sensors der Kamera gegenüber Fehlereinflüssen zulässt. Vorteilhaft ist durch die Zweierpotenzen auch unterstützt, dass Anforderungen an einen Druckprozess des Entfernungsmesselements reduziert sein können, weil weniger Kontrast erzeugt werden muss.

Durch die disjunkte Struktur der diskreten Werteräume wird gewährleistet, dass die Unterschiedlichkeit der Werte bestehen bleibt. Die Gesamtwerte werden dabei durch eine Addition der einzelnen Werte der Submuster auf den verschiedenen Skalen der Submuster ermittelt.

Mathematisch ausgedrückt bedeutet dies:
Sei $V1(a)$ und $V1(b)$ jeweils der Wert an der Stelle a und b für ein Muster der Skala 1 (kleine Skala).

Für zwei exemplarische Muster $V1(a)$, $V1(b)$ gilt:

$$\text{Wenn } V1(a) \mathrel{!}= V1(b) \text{ dann gilt, dass } V(a) \mathrel{!}= V(b)$$

Dies ergibt sich aus:

$$V(a) = V1(a) + \text{Summe } (Vi(a), i=2\dots N)$$

und

$$V(b) = V1(b) + \text{Summe } (Vi(b), i=2\dots N)$$

Da $|V1(a) - V1(b)| < R$, wobei nach Definition gilt: $Vi(x) > R$, folgt, dass wenn $V1(a) \mathrel{!}= V1(b) \Leftrightarrow V(a) \mathrel{!}= V(b)$.

R ... kleinster Abstand zwischen Werten der nächsten Skala bzw. Anfangswerte der nächsten Skala
Falls z.B. eine Skala Werte von 0...63 aufweist, wäre R = 64.

Die Unterscheidbarkeit der Submuster bleibt bei der Addition der Submuster im Gesamtmuster also erhalten, weil sich die Skalen nicht gegenseitig aufheben können. Das Ergebnis ist ein in Fig. 5 dargestelltes Gesamtmuster, das auf verschiedenen Werteskalen separierbare Submuster enthält und das eine Addition der Submuster der Figuren 3 und 4 repräsentiert.

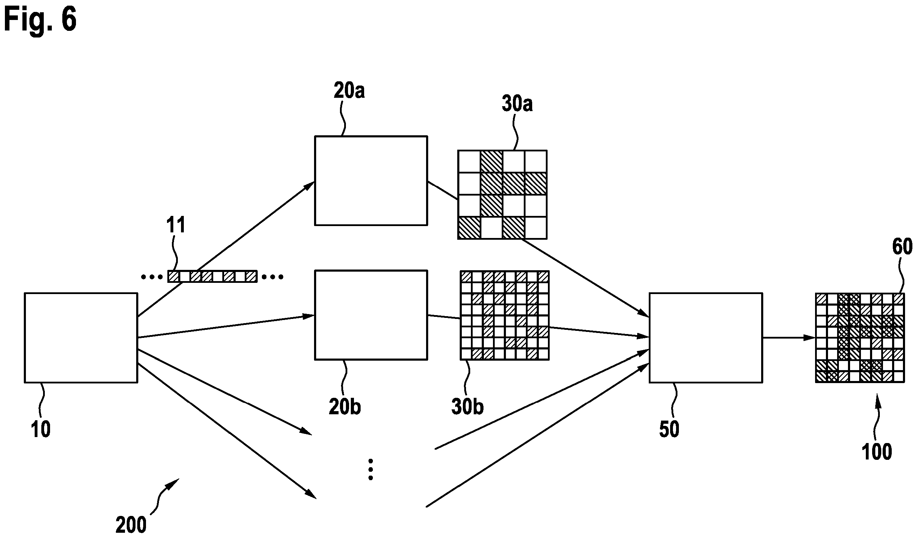

Ein Prozess bzw. eine Vorrichtung 200 zum Herstellen eines vorgeschlagenen Oberflächenmusters für ein Entfernungsmesselement 100 ist prinzipiell in Fig. 6 dargestellt. Zunächst wird mittels einer Sequenz-Generatoreinrichtung 10 eine Basissequenz 11 von sich nicht wiederholenden Werten (Farb- oder Intensitätswerte) erzeugt. Dies bedeutet, dass für einen definierten Wertebereich W in der erzeugten Basissequenz 11 keine weitere Position existiert, bei der eine Subsequenz der Länge W mit gleichen Werten existiert. In einer vorteilhaften Variante kann bestimmt werden, dass sich die eindimensionale Basissequenz 11 durch mindestens M Werte unterscheiden muss. Der Fachmann erkennt, dass für die Ermittlung der eindimensionalen, nicht-wiederholenden Basissequenz 11 zahlreiche Möglichkeiten bestehen, auf die hier nicht näher eingegangen wird, da sie für die Erfindung nicht wesentlich sind.

Dieses eindimensionale Basismuster bzw. diese eindimensionale Basissequenz 11 wird Muster-Generatoreinrichtungen 20a...20n für verschiedene Skalen zugeführt. Im einfachsten Fall kann ein zweidimensionales Muster aus einer zufällig versetzten Basissequenz 11 einer Spalte in die Zeilen eines Musters kopiert werden. Jede Skala entspricht dabei einer Größe eines Grundmusters und einer Größenordnung im Wertebereich W. Die derart von jeweils einer Muster-Generatoreinrichtung 20a...20n erstellten Submuster 30a...30n werden mittels einer Addiereinrichtung 50 addiert.

Ein möglicher Ansatz zur Erzeugung eines zweidimensionalen Musters aus der eindimensionalen Basissequenz 11 besteht darin, dass insbesondere für jede Zeile die Distanzen aufgetragen werden, wobei die erste Zeile genau diese Basissequenz 11 repräsentiert. Jede weitere Zeile wäre jeweils die Basissequenz 11 um einen Zufallswert versetzt. Ein anderer Ansatz (nicht in Figuren dargestellt) wäre ein direktes Bereitstellen eines zweidimensionalen Musters. Dies trifft auch schon auf die Submuster 30a, 30b zu, wodurch sich im Ergebnis das Oberflächenmuster 60 ergibt, welches für ein Entfernungsmesselement 100 z.B. in klebbarer und/oder aufdruckbarer und/oder aufmalbarer und/oder aufleuchtbarer Form bereitgestellt wird.

Als ein nützlicher Anwendungsfall kann das Entfernungsmesselement 100 beispielsweise zur Entfernungsmessung beim automatisierten Parken in Parkhäusern verwendet werden. Denkbar sind auch mikroskopische Anwendungen, z.B. bei der Herstellung von Halbleiterschaltungen, wobei das Entfernungsmesselement 100 zum Ermitteln von Entfernungen zu Halbleiterschaltungselementen verwendet werden.

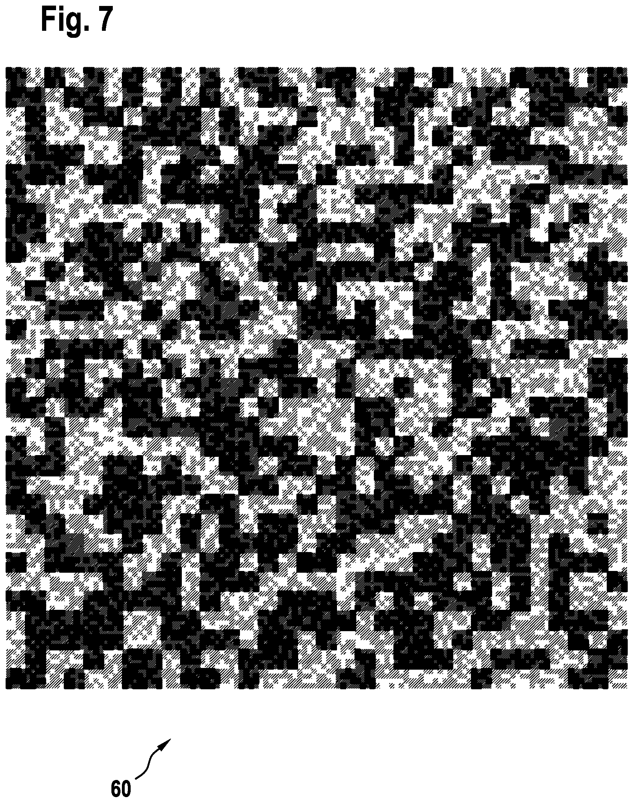

Fig. 7 zeigt eine Ausführungsform eines derart hergestellten Oberflächenmusters 60 für ein Entfernungsmesselement 100. Man erkennt insgesamt vier Intensitätswerte (schwarz - dunkelgrau - hellgrau - weiß) zweier Submuster, die in unterschiedlichen Skalen nicht wiederholbare Sequenzen aufweisen.

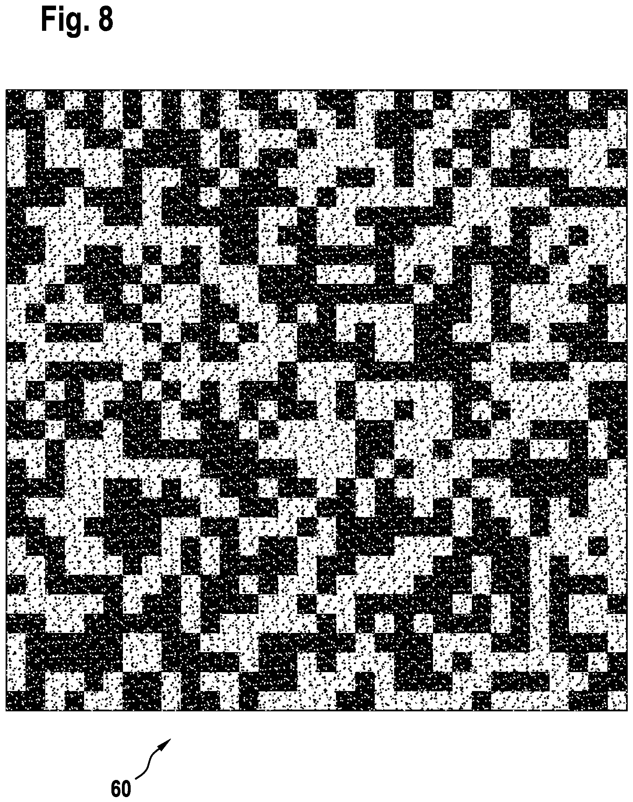

Mit der Anzahl der Wertestufen steigt der Aufwand für die Herstellung des Oberflächenmusters 60. Eine Verbesserung kann, wie in Fig. 8 dargestellt, eine Darstellung der Werte durch "Dithering" bringen. Fig. 8 zeigt das Oberflächenmuster 60 von Fig. 7 in geditherter Form. Dies bedeutet, dass die Farbwerte dunkelgrau und hellgrau nunmehr durch die Farbwerte weiß und schwarz nachgebildet werden, wodurch sich eine vereinfachte Herstellung des Oberflächenmusters 60 ergibt.

Jede Kamera hat in Abhängigkeit von Einflussgrößen wie Temperatur, Lichtverhältnissen, usw. eine Ungenauigkeit in der Auflösung, deren zeitlicher Verlauf nicht determinierbar ist. Dieses sogenannte "Rauschen" der Kamera kann als ein additives Signal mit der maximalen Amplitude 'r' verstanden werden, welches auf den Pixelwert 'p' aufaddiert wird. Der gemessene Wert ‚g' ergibt sich zu ‚r + p'.

Seien 'p$_{min}$' und 'p$_{max}$' die Werte, die die Grenze zu den Toleranzbereichen der benachbarten diskreten Werte von ‚p' kennzeichnen. Der gemessene Wert ‚g' kann dem Pixelwert ‚p' zugeordnet werden, wenn g > p$_{min}$ und g < p$_{max}$. Diese Werte ergeben sich direkt aus den Stufenhöhen zwischen den Werten der Werteskalen.

Bleibt die maximale Amplitude des Rauschens unterhalb der minimalen Stufenhöhe der jeweiligen Werteskala, so ist ‚r + p > p$_{min}$' und ‚r + p < p$_{max}$' und das System indifferent gegen Rauschen. Ist die Rauschamplitude der Kamera bekannt, so sollte vorzugsweise daher eine Stufenhöhe der Werteskala entsprechend ausgelegt werden. Dieses sogenannte "Rauschen" kann als ein additives Signal verstanden werden, welches auf den Pixelwert aufaddiert wird.

Bleibt die maximale Amplitude des Rauschens unterhalb der minimalen Stufenhöhe der jeweiligen Werteskala der Submuster, so ist das System, d.h. die Kamera indifferent gegen Rauschen. Vorzugsweise werden daher Stufenhöhen der jeweiligen Werteskalen des Musters des Entfernungsmesselements entsprechend ausgelegt. Wenn somit in den Submustern große Stufen vorhanden sind, kann die Kamera vorteilhaft einen hohen Rauschanteil (z.B. thermisches Rauschen) aufweisen, um das Muster auf dem Entfernungsmesselement immer noch zuverlässig zu detektieren. Dadurch ist im Ergebnis ein zuverlässiges Detektieren der Muster mit kostengünstigen Kameras unterstützt.

Sollte die maximale Amplitude die minimale Stufenhöhe zwischen den Werten der jeweiligen Werteskala des jeweiligen Submusters überschreiten, kann es sein, dass ein anderer Pixelwert entsteht als angedacht. Dementsprechend können Pixel als "gleich" detektiert werden, die eigentlich unterschiedlich sind. Nun kann die Wahrscheinlichkeit für das Überschreiten der Amplitude in Betracht gezogen werden. Dazu muss bei der Bestimmung der Basissequenz 11 festgelegt werden, dass

$$G > R$$

wobei G die minimale Anzahl an unterschiedlichen Werten jeder Subsequenz ist.

Damit dies funktioniert, muss die Disparitätsanalyse mindestens G Pixel der direkten Umgebung betrachten. Auch in diesem Fall ist das System gegenüber Rauschen indifferent.

Ist die Anzahl der durch die Disparitätsanalyse betrachteten Pixel W geringer als G, so kann es sein, dass eine Musterwiederholung entsteht, wenn W-G Pixel Werte enthalten, die sich in einer Sequenz wiederholen. Angenommen, dass die W-G Pixel dies immer tun, so lässt sich eine Worst-Case-Wahrscheinlichkeit eines Fehlers als die Wahrscheinlichkeit definieren als die Wahrscheinlichkeit, dass für W-G Pixel die Rauschamplitude den Minimalstufenabstand überschreitet. Somit kann es bei der Erkennung des Entfernungsmesselements zu Fehlern kommen, wenn das Rauschen der Kamera derart stark ist, dass die Anzahl der unterschiedlichen Pixel geringer ist als die Anzahl der Pixel, die durch das Rauschen der Kamera zufällig entstehen können. Unter Pixel wird in diesem Zusammenhang das auf den Sensor der Kamera projizierte Muster des Entfernungsmesselements verstanden.

Diese Wahrscheinlichkeit kann zur qualitativen Bewertung des Gesamtsystems sowie zur Sicherheitsbetrachtung herangezogen werden.

Sollte keines der oben geschilderten Verfahren zur Erzeugung einer Basissequenz 11 praktikabel sein, so ergibt sich eine Worst-Case-Wahrscheinlichkeit eines Fehlers als die Wahrscheinlichkeit, dass bei W - G Pixel die Rauschamplitude den Minimalstufenabstand überschreitet. Die Worst-Case-Wahrscheinlichkeit in diesem Zusammenhang sagt aus, wie wahrscheinlich es ist, dass ein Pixel nicht den ihm angedachten Wert des nicht-wiederholenden Musters annimmt.

Nicht-wiederholende Sequenzen können entsprechend robust gestaltet werden, so dass eine Anzahl N von Fehlern noch nicht zu einer wiederholenden Sequenz führt. Beispielsweise stellt man sicher, dass sich eine Sequenz von 11 Pixel für alle Pixel der Sequenz mindestens in zwei Werten von einer anderen Sequenz unterscheidet, so können zwei Fehler auftreten, ohne dass ein Fehler auftritt.

Eine durch das Rauschen der Kamera verursachte Kontrastverfälschung entspricht einer "Stauchung" oder "Streckung" der Pixelwerte. Dies entspricht einer Reduktion des minimalen Werteabstands R.

Die genannte Kontrastverfälschung bewirkt, dass die numerischen Pixel-Werte (Farbe oder Intensität) näher aneinander rücken. Dies entspricht einem geringeren Abstand zwischen den Stufenhöhen der Werte der Skalen in Fig. 5. Tritt ein Rauschen auf, also ein addiertes Signal mit einer bestimmten Amplitude, so wird es wahrscheinlicher, dass eine falsche Stufenhöhe angenommen wird.

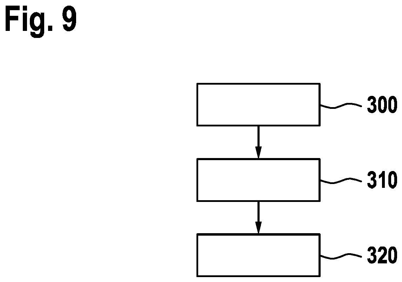

Fig. 9 zeigt einen prinzipiellen Ablauf eines Verfahrens zum Herstellen eines Entfernungsmesselements 100.

In einem Schritt 300 wird ein Bereitstellen wenigstens eines ersten Submusters 30a mit einer nicht wiederholenden Struktur von Werten in einem definierten ersten Wertebereich W1 durchgeführt.

In einem Schritt 310 wird ein Bereitstellen wenigstens eines zweiten Submusters 30b, das gegenüber dem ersten Submuster 30a eine nicht wiederholende Struktur von Werten in einem zweiten Wertebereich W2 aufweist, durchgeführt, wobei das zweite Submuster 30b im definierten ersten Wertebereich W1 keine Werte aufweist.

In einem Schritt 320 wird ein summarisches Überlagern der wenigstens zwei Submuster 30a, 30b über einen definierten Pixelbereich durchgeführt, wobei der minimale Abstand zwischen den Werten des zweiten Wertebereichs W2 größer ist als der Maximalwert des ersten Wertebereichs W1.

Vorteilhaft kann das oben genannte Verfahren als eine Software ausgebildet sein, welche auf der elektronischen Vorrichtung 200 zum Herstellen eines Entfernungsmesselements 100 abläuft. Auf diese Weise ist eine leichte Adaptierbarkeit des Verfahrens unterstützt und ein hoher Automatisierungsgrad beim Herstellen des Entfernungsmesselements 100 möglich.

Zusammenfassend wird mit der vorliegenden Erfindung ein Multi-Skalen-Muster als Entfernungsmesselement vorgeschlagen, welches es ermöglicht, dass auf den verschiedenen Skalen des Multi-Skalen-Musters jeweils ein eigenständiges, identifizierbares Muster existiert. Auf diese Weise kann es bei der Entfernungsmessung aus unterschiedlichen Entfernungen eindeutig identifiziert werden, wodurch eine exakte Entfernungsmessung mittels Stereokameras unterstützt ist.

Lediglich beispielhaft wurde vorgehend das Oberflächenmuster anhand zweier Submuster offenbart. Es versteht jedoch von selbst, dass die Anzahl der Submuster des Oberflächenmusters auch größer sein kann.

Der Fachmann erkennt, dass eine Vielzahl von Abwandlungen der Erfindung möglich ist, ohne vom Kern der Erfindung abzuweichen.

**Patentansprüche**

1.  Entfernungsmesselement (100), aufweisend:

    - wenigstens ein erstes Submuster (30a) mit einer nicht wiederholenden Struktur von Werten in einem definierten ersten Wertebereich (W1); und
    - wenigstens ein zweites Submuster (30b), das gegenüber dem ersten Submuster (30a) eine nicht wiederholende Struktur von Werten in einem zweiten Wertebereich (W2) aufweist, wobei
    - die wenigstens zwei Submuster (30a, 30b) über einen definierten Oberflächenbereich summarisch zu einem Oberflächenmuster (60) überlagert sind;
**dadurch gekennzeichnet, dass**
- das zweite Submuster (30b) im definierten ersten Wertebereich (W1) keine Werte aufweist;

wobei der minimale Abstand zwischen den Werten des zweiten Wertebereichs (W2) größer ist als der Maximalwert des ersten Wertebereichs (W1).

2. Entfernungsmesselement (100) nach Anspruch 1, **dadurch gekennzeichnet, dass** ein Farbwert oder ein Intensitätswert summarisch überlagerbar sind.

3. Entfernungsmesselement (100) nach Anspruch 2, **dadurch gekennzeichnet, dass** das Entfernungselements wenigstens eines aus: druckbar, malbar, klebbar, aufleuchtbar ist.

4. Entfernungsmesselement (100) nach einem der vorhergehenden Ansprüche, **dadurch gekennzeichnet, dass** das Oberflächenmuster (60) gedithert ausgebildet ist.

5. Entfernungsmesselement (100) nach einem der vorhergehenden Ansprüche, wobei die Werte der Wertebereiche (W1, W2) durch 2-er Potenzen repräsentiert sind.

6. Verfahren zum Herstellen eines Entfernungsmesselements (100), aufweisend die Schritte:

    - Bereitstellen wenigstens eines ersten Submusters (30a) mit einer nicht wiederholenden Struktur von Werten in einem definierten ersten Wertebereich (W1); **gekennzeichnet durch**
    - Bereitstellen wenigstens eines zweiten Submusters (30b), das gegenüber dem ersten Submuster (30a) eine nicht wiederholende Struktur von Werten in einem zweiten Wertebereich (W2) aufweist, wobei das zweite Submuster (30b) im definierten ersten Wertebereich (W1) keine Werte aufweist; und
    - Summarisches Überlagern der wenigstens zwei Submuster (30a, 30b) über einen definierten Oberflächenbereich, wobei der minimale Abstand zwischen den Werten des zweiten Wertebereichs (W2) größer ist als der Maximalwert des ersten Wertebereichs (W1).

7. Vorrichtung (200) zum Erzeugen eines Entfernungsmesselements (100), aufweisend:

    - eine Sequenz-Generatoreinrichtung (10) zum Erzeugen einer Basissequenz (11);
    - wenigstens zwei Muster-Generatoreinrichtungen (20a, 20b), denen die Basissequenz (11) zuführbar ist und mit denen Submuster (30a, 30b) erzeugbar sind; und
    - eine Addiereinrichtung (50) zum summarischen Überlagern der Submuster; **gekennzeichnet durch**
    - wenigstens ein erstes Submuster (30a) mit einer nicht wiederholenden Struktur von Werten in einem definierten ersten Wertebereich (W1) und wenigstens ein zweites Submuster (30b), das gegenüber dem ersten Submuster (30a) eine nicht wiederholende Struktur von Werten in einem zweiten Wertebereich (W2) aufweist, erzeugbar sind, wobei das zweite Submuster (30b) im definierten ersten Wertebereich (W1) keine Werte aufweist, wobei die wenigstens zwei Submuster (30a, 30b) über einen definierten Oberflächenbereich summarisch zu einem Oberflächenmuster (60) überlagert sind, wobei der minimale Abstand zwischen den Werten des zweiten Wertebereichs (W2) größer ist als der Maximalwert des ersten Wertebereichs (W1).

8. Computerprogrammprodukt mit Programmcodemitteln zum Ausführen des Verfahrens nach Anspruch 6, wenn es auf einer Vorrichtung (200) zum Herstellen eines Entfernungsmesselements (100) abläuft oder auf einem computerlesbaren Datenträger gespeichert ist.

**Claims**

1. Distance measuring element (100), comprising:

    - at least one first sub-pattern (30a) having a non-repeating structure of values in a defined first value range (W1); and
    - at least one second sub-pattern (30b), which, in comparison with the first sub-pattern (30a), has a non-repeating structure of values in a second value range (W2),
    - the at least two sub-patterns (30a, 30b) being summationally superposed over a defined surface region to form a surface pattern (60);
**characterized in that**
- the second sub-pattern (30b) has no values in the defined first value range (W1);

the minimum separation between the values of the second value range (W2) being greater than the maximum value of the first value range (W1).

2. Distance measuring element (100) according to Claim 1, **characterized in that** a colour value or an intensity value are summationally superposable.

3. Distance measuring element (100) according to Claim 2, **characterized in that** the distance element is at least one of the following: printable, paintable, adhesively bondable, illuminable.

4. Distance measuring element (100) according to any of the preceding claims, **characterized in that** the surface pattern (60) is embodied in dithered fashion.

5. Distance measuring element (100) according to any of the preceding claims, the values of the value ranges (W1, W2) being represented by powers of 2.

6. Method for producing a distance measuring element (100), comprising the following steps:

   - providing at least one first sub-pattern (30a) having a non-repeating structure of values in a defined first value range (W1); **characterized by**
   - providing at least one second sub-pattern (30b), which, in comparison with the first sub-pattern (30a), has a non-repeating structure of values in a second value range (W2), the second sub-pattern (30b) having no values in the defined first value range (W1); and
   - summationally superposing the at least two sub-patterns (30a, 30b) over a defined surface region, the minimum separation between the values of the second value range (W2) being greater than the maximum value of the first value range (W1).

7. Apparatus (200) for generating a distance measuring element (100), comprising:

   - a sequence generator device (10) for generating a base sequence (11);
   - at least two pattern generator devices (20a, 20b), to which the base sequence (11) is feedable and by which sub-patterns (30a, 30b) are generable; and
   - an adding device (50) for summationally superposing the sub-patterns; **characterized by**
   - at least one first sub-pattern (30a) having a non-repeating structure of values in a defined first value range (W1) and at least one second sub-pattern (30b), which, in comparison with the first sub-pattern (30a), has a non-repeating structure of values in a second value range (W2), are generable, the second sub-pattern (30b) having no values in the defined first value range (W1), the at least two sub-patterns (30a, 30b) being summationally superposed over a defined surface region to form a surface pattern (60), the minimum separation between the values of the second value range (W2) being greater than the maximum value of the first value range (W1).

8. Computer program product having program code means for carrying out the method according to Claim 6 when it is executed on an apparatus (200) for producing a distance measuring element (100) or is stored on a computer-readable data carrier.

**Revendications**

1. Elément de télémétrie (100), présentant :

   - au moins un premier sous-motif (30a) ayant une structure non répétitive de valeurs dans une première plage de valeurs définie (W1) ; et
   - au moins un deuxième sous-motif (30b) qui présente par rapport au premier sous-motif (30a) une structure non répétitive de valeurs dans une deuxième plage de valeurs (W2), dans lequel
   - les au moins deux sous-motifs (30a, 30b) sont superposés par sommation sur une zone de surface définie en un motif de surface (60) ;
**caractérisé en ce que**
- le deuxième sous-motif (30b) ne présente aucune valeur dans la première plage de valeurs définie (W1) ;

la distance minimale entre les valeurs de la deuxième plage de valeurs (W2) étant supérieure à la valeur maximale de la première plage de valeurs (W1).

2. Elément de télémétrie (100) selon la revendication 1, **caractérisé en ce qu'**une valeur chromatique ou une valeur d'intensité peuvent être superposées par sommation.

3. Elément de télémétrie (100) selon la revendication 2, **caractérisé en ce que** l'élément de télémétrie peut être au moins l'un parmi : imprimé, dessiné, collé, éclairé.

4. Elément de télémétrie (100) selon l'une quelconque des revendications précédentes, **caractérisé en ce que** le motif de surface (60) est réalisé de manière tramée.

5. Elément de télémétrie (100) selon l'une quelconque des revendications précédentes, dans lequel les valeurs des plages de valeurs (W1, W2) sont représentées par des puissances de deux.

6. Procédé de réalisation d'un élément de télémétrie (100), présentant l'étape consistant à :

   - fournir au moins un premier sous-motif (30a) ayant une structure non répétitive de valeurs dans une première plage de valeurs définie (W1) ;

   **caractérisé par** les étapes consistant à

   - fournir au moins un deuxième sous-motif (30b) qui présente par rapport au premier sous-motif (30a) une structure non répétitive de valeurs dans une deuxième plage de valeurs (W2), le deuxième sous-motif (30b) ne présentant aucune valeur dans la première plage de valeurs définie (W1) ; et
   - superposer par sommation les au moins deux sous-motifs (30a, 30b) sur une zone de surface définie, la distance minimale entre les valeurs de la deuxième plage de valeurs (W2) étant supérieure à la valeur maximale de la première plage de valeurs (W1).

7. Dispositif (200) permettant de générer un élément de télémétrie (100), présentant :

   - un moyen de génération de séquence (10) servant à générer une séquence de base (11) ;
   - au moins deux moyens de génération de motif (20a, 20b) auxquels la séquence de base (11) peut être amenée et qui permettent de générer le sous-motif (30a, 30b) ; et
   - un moyen d'addition (50) servant à la superposition par sommation des sous-motifs ;

   **caractérisé par**

   - au moins un sous-motif (30a) ayant une structure non répétitive de valeurs dans une première plage de valeurs définie (W1) et au moins un deuxième sous-motif (30b) qui présente par rapport au premier sous-motif (30a) une structure non répétitive de valeurs dans une deuxième plage de valeurs (W2), le deuxième sous-motif (30b) ne présentant aucune valeur dans la première plage de valeurs définie (W1), les au moins deux sous-motifs (30a, 30b) étant superposés par sommation sur une zone de surface définie en un motif de surface (60), la distance minimale entre les valeurs de la deuxième plage de valeurs (W2) étant supérieure à la valeur maximale de la première plage de valeurs (W1).

8. Produit de programme informatique comprenant des moyens de code programme permettant d'exécuter le procédé selon la revendication 6 lorsqu'il est exécuté sur un dispositif (200) servant à réaliser un élément de télémétrie (100) ou est stocké sur un support de données lisible par ordinateur.

# Fig. 1

# Fig. 2

EP 3 762 870 B1

**Fig. 3**

EP 3 762 870 B1

**Fig. 4**

Fig. 5

# Fig. 6

EP 3 762 870 B1

**Fig. 7**

60

## Fig. 8

60

**Fig. 9**

300

310

320

EP 3 762 870 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112015006609 T5